# EUROPÄISCHE PATENTSCHRIFT

(11) **EP 0 319 734 B1**
(45) Veröffentlichungstag und Bekanntmachung des Hinweises auf die Patenterteilung: **16.06.1993**
(21) Anmeldenummer: 88118862.7
(22) Anmeldetag: 11.11.1988
(51) Int. Cl.: C08J 7/12, B29C 71/04

(54) **Verfahren zum Fluorieren von Kunststoffgegenständen**
Process for fluorinating plastic articles
Procédé pour la fluoration des articles en matière plastique

(30) Priorität: 25.11.1987 DE 3739994
(43) Veröffentlichungstag der Anmeldung: 14.06.1989
(73) Patentinhaber: Linde Aktiengesellschaft, 65189 Wiesbaden (DE)
(72) Erfinder: Rebhan, Dieter , Ing.grad., D-8192 Geretsried-Gelting (DE); Strigl, Reinhard, Dipl.-Ing., D-8000 München 50 (DE)
(74) Vertreter: Schaefer, Gerhard, Dr.

(56) Entgegenhaltungen:
- WO-A-86/02023
- DE-A- 3 027 531
- US-A- 4 264 750

## Beschreibung

Die Erfindung betrifft ein dem eigentlichen Herstellungsprozeß nachgeordnetes Verfahren zum Fluorieren von Kunststoffgegenständen nach dem Oberbegriff des Anspruchs 1, das unter besonderer Berücksichtigung der Gefahr beim Umgang mit Fluor als Arbeitsstoff gestaltet ist.

Fluor ist aufgrund seiner aggressiven Natur ein gefährlicher Arbeitsstoff, der die verschiedensten Materialien angreift, korrodiert oder sogar zerstört und der auch für den menschlichen Organismus gefährlich ist.

Deshalb sind bei der Verwendung von Fluor bei technischen Prozessen besondere Maßnahmen notwendig, die die Sicherheit einer solchen Anlage gewährleisten. Es sind beispielsweise besondere Leitungssysteme, Abdichtungen und Kapselungen ganzer Anlagen notwendig. Auch Lieferung und Lagerung müssen bereits besonderen Vorkehrungen unterliegen.

Fluor steht heute für die technische Verwendung, insbesondere auch bei Fluorierungsverfahren mit Stickstoff vermischt aus Gasflaschen zur Verfügung. Der Fluoranteil des Gasgemisches beträgt dabei aus Sicherheitsgründen nur etwa 10 bis 20 %. Da bei der Fluorierung von Kunststoffgegenständen nur Fluorgehalte bis zu etwa 10 % notwendig sind, wird das Fluor-Stickstoff-Liefergas mit reinem Stickstoff auf das gewünschte Maß verdünnt.

Prinzipiell sind bei der Herstellung von fluorierten Kunststoffgegenständen, insbesondere Hohlkörpern, zweierlei Fluorierungsverfahren bekannt: Entweder wird die Fluorierung in einem Arbeitsgang (Inline-Verfahren) mit der Formgebung des Gegenstandes, z.B. beim Blasformen, durchgeführt (z.B. DE-PS 24 01 948), oder die Fluorierung wird in einem eigenen Arbeitsgang (Offline-Verfahren) nach dem eigentlichen Herstellungsprozeß vollzogen (DE-PS 26 44 508).

In beiden Fällen aber ist bei der Durchführung der Fluorierung auf den sicheren Umgang mit dem Fluor enthaltenden Gasgemisch zu achten. Diese Problematik wird auch in dem in der DE-PS 35 23 137 besprochenen Inline-Verfahren behandelt.

Ebenso bezieht sich die DE-A1 30 27 531 auf ein sicheres Verfahren zur Fluorierung von Oberflächen von Kunststoffteilen, insbesondere von Innenoberflächen von Kunststoffbehältern, bei dem jedoch ein bei Normalbedingungen stabiles Gasmedium ohne elementares Fluor zum Einsatz kommt. Die Fluorierung erfolgt gemäß dieser DE-A1 dadurch, daß der zu behandelnde Gegenstand sowie das Gasmedium in eine Unterdruckkammer eingebracht werden und dort das Gasmedium, z.B. eine Fluor-Kohlenwasserstoff-Verbindung (z.B CF4) oder auch SF6, bei Unterdruck durch Energiezufuhr in den Plasmazustand versetzt wird. Dadurch wird die Bildung von fluorierenden Komponeten im Gasmedium induziert, die dann die Fluorierung der benachbarten Kunststoff-Oberflächen bewirken. Nach ausgeführter Fluorierung wird die Plasmabildung unterbunden, wodurch keine gefährlichen Fluorkomponenten mehr entstehen.

Weiters enthält die WO-A 86/02023 ein Verfahren zum Fluorieren von Kunststoffteilen oder noch nicht zu einem Gegenstand geformten Kunststoffpellets, bei dem eine - wiederum nicht elementares sondern gebundenes Fluor enthaltende - gasförmige Verbindung - z.B. CF4 oder SF6 - auf Dekompositionstemperatur gebracht und dann der zu fluorierenden Oberfläche zugeleitet wird. Diese Fluorverbindungen werden gemäß der WO-A 86/02023 insbesondere durch eine Flamme aufgespalten. In einer Nebenvariante wird die Aufspaltung auch durch ein Argon-Plasma in einer trockener Atmosphäre bewirkt. Als Anwendungsbeispiel wird die Fluorierung von Kunststoff-Pellets bzw. -granulat auf einem Förderband mit einem darüber angeordneten Brenner sowie die Fluorierung eines Profils oder Behälters mit einem, das Werkstück überstreichenden Brenner gezeigt, wobei die Fluor enhaltende Verbindung jeweils dem Brenner und letztlich dessen Flamme zugeführt wird.

Bei den zuletzt beschriebenen Verfahren besteht also jeweils der Vorteil einer hohen, verfahrensimanenten Sicherheit, da zunächst kein elementares Fluor vorhanden ist. Andererseits bedingen diese Verfahren im Vergleich zu den vorgenannten doch weiteren Aufwand - Niedrigdruckerzeugung, Versorgung mit Brenngas - so daß durchaus ein Bedürfnis nach weiteren, vorteilhaften Verfahrensweisen zum Fluorieren vorliegt.

Der Erfindung liegt daher die Aufgabe zugrunde, ein mit tragbarem Aufwand hohen Sicherheitsanforderungen nachkommendes, effektives Verfahren zum Fluorieren von Kunststoffgegenständen anzugeben.

Diese Aufgabe wird erfindungsgemäß dadurch gelöst, daß in eine vorhandene Behandlungskammer ein Plasmabrenner eingeführt wird oder sich dort befindet und mit dem Lichtbogen des Plasmabrenners aus dem zur Kammer zugeführten Basisgasgemisch durch Aufspalten der darin enthaltenen fluorhaltigen Verbindung(en) ein fluorhaltiges Behandlungsgas erzeugt wird, wobei dies solange erfolgt, bis die gewünschte Fluorierung erreicht ist.

Das erfindungsgemäße Verfahren ermöglicht eine gefahrfreie Fluorierung von Kunststoffgegenständen, da elementares Fluor mit dem Plasmabrenner erst dort erzeugt wird, wo eine Fluorierung erfolgen soll. Deshalb muß nur die eigentliche Behandlungskammer und die Entsorgungsseite einer Fluorierungsanlage den Sicherheitsanforderungen für Fluor genügen. Die Versorgungsseite hingegen ist nur mit konventionellen gastechnischen Elementen auszugestalten.

Als Inertgas, das einen Teil des Basisgasgemisches bildet, wird bei der Durchführung des erfindungsgemäßen Verfahrens in vorteilhafter Weise entweder Stickstoff oder Argon, oder ein Gemisch aus beiden, verwendet. Ein derartiges Gemisch fördert einerseits die Funktion des Plasmabrenners und stellt andererseits einen geeigneten Mischpartner für fluorhaltige, gasförmige Verbindungen dar, die den zweiten Anteil des Basisgasgemisches darstellen. Der Umgang mit fluorhaltigen Verbindungen, wie SF₆ oder CF₄, wirft, da Fluor nur in gebundener Form vorliegt, keine weiteren Probleme auf. Andererseits tritt eine ausreichende Erzeugung von Fluor durch Einwirkung des Lichtbogens des Plasmabrenners ein.

Ub einer günstigen Weiterbildung wird anschließend an die Fluorisierung die Behandlungskammer mit reinem Inertgas gespült, um - nach der Abschaltung des Brenners - eventuell noch vorhandenes Fluor auszuspülen.

In einer besonders vorteilhaften Ausgestaltung des Verfahrens wird das Basisgasgemisch über die Gaszuführungen des Plasmabrenners zugeführt. Dabei ist keine zusätzliche Gaszuleitung notwendig und das Basisgasgemisch wird in günstiger Weise an den Lichtbogen des Plasmabrenners herangeführt.

Eine spezielle und günstige Variante des erfindungsgemäßen Verfahrens ergibt sich beim Fluorieren von Kunststoffhohlkörpern, z.B. Tanks, in dem der Plasmabrenner und ebenso das Basisgasgemisch direkt ins Innere des Kunststoffhohlkörpers eingeführt werden und auch das Spülgas direkt dem Inneren des Hohlkörpers zugeführt wird.

Die Einleitung des Basisgasgemisches ins Innere und die Einführung des Plasmabrenners ins Innere des zu fluorierenden Hohlkörpers bewirken die Erzeugung des Fluors genau an dem Ort, an dem eine Fluorierung erfolgen soll, nämlich an der Innenseite des Hohlkörpers.

Durch Zufuhr eines geeigneten Basisgasgemisches in passender Menge und einer geeigneten Dauer der Zufuhr kann so eine exakte, sparsame und gefahrlose Innenseitenfluorierung erreicht werden, wobei die Zufuhrparameter (Zusammensetzung und Menge)so gewählt sein müssen, daß eine optimale Ausnutzung des gebundenen Fluors erfolgt.

Im folgenden soll ein Ausführungsbeispiel des erfindungsgemäßen Verfahrens näher erläutert werden.

Ein geblasener, möglichst noch fertigungswarmer Kunststoffbehälter wird in eine gasdicht verschließbare Behandlungskammer eingebracht und positioniert. Durch die Öffnung des Behälters wird ein Plasmabrenner mit einer speziellen Haltevorrichtung in die Behandlungskammer eingeführt. Auch die Gaszufuhr- und Abführleitungen für das Basisgasgemisch und das Behandlungsgas bzw. Restgas nach der Fluorierung sind an der Haltevorrichtung angeordnet. Überdies ist die Haltevorichtung so ausgelegt, daß sie nach Inkorporation des Brenners im Regelfall gasdicht an der Öffnung des zu behandelnden Behälters angeschlossen ist. Nach Verschließen der Behandlungskammer wird dann dem Behälterinneren bei gleichzeitig eingeschaltetem Plasmabrenner Behandlungsgas zugeführt.

Im Behälterinneren bildet sich aus dem Basisgasgemisch das eigentliche, fluorhaltige Behandlungsgas, daß die Fluorierung der Behälterinnenwände, unterstützt zusätzlich durch die Brennerabwärme, bewirkt. Nach einer entsprechend der gewünschten Fluorierung zu wählenden Behandlungszeit, die durch Versuche bestimmt werden kann, wird dann, nach Abschaltung des Brenners, statt Basisgasgemisch Inertgas, z.B. Stickstoff, ins Behälterinnere eingeleitet, um eine Ausspülung von noch vorhandenem gasförmigem Fluor zu erreichen. Während der gesamten Behandlung wird auch die einschließende Behandlungskammer mit Inertgas gespült, um eventuell aus dem Behälter austretendes fluorhaltiges Gas ebenfalls sicher zu entsorgen.

Es ist zu erkennen, daß im wesentlichen nur die Entsorgungsseite mit dem für Fluor notwendigen Sicherheitstandard auszulegen ist und ansonsten das erfindungsgemäße Verfahren vom Prinzip her ein hohes Maß an Sicherheit bei tragbarem Aufwand impliziert.

## Patentansprüche

1. Verfahren zum Fluorieren von Kunststoffgegenständen zur Erniedrigung der Durchlässigkeit gegenüber Gasen und Dämpfen, wobei der fertig geformte Kunststoffgegenstand in eine gasdicht verschließbare Behandlungskammer gebracht und darin positioniert wird
und bei dem für die Fluorierung ein Basisgasgemisch, das aus Inertgas und einer fluorhaltigen Verbindung (fluorhaltigen Verbindungen) besteht, der Behandlungskammer zugeführt wird, dadurch gekennzeichnet,
daß ein Plasmabrenner in die Behandlungskammer eingeführt wird oder sich dort befindet und - nach Verschließen der Behandlungskammer -
mit dem Lichtbogen des Plasmabrenners aus dem zugeführten Basisgasgemisch durch Aufspalten der darin enthaltenen fluorhaltigen Verbindung(en) ein fluorhaltiges Behandlungsgas erzeugt wird,
wobei dies solange erfolgt, bis die gewünschte Fluorierung erreicht ist.

2. Verfahren nach Anspruch 1, dadurch gekennzeichnet, daß nach der Fluorierung die Behandlungskammer mit reinem Inertgas gespült wird.

3. Verfahren nach Anspruch 1, dadurch gekennzeichnet, daß als Inertgas des Basisgasgemisches Stickstoff und/oder Argon und als fluorhaltige Verbindungen SF₆ und/oder CF₄ verwendet werden.

4. Verfahren nach Anspruch 1, 2 oder 3, dadurch gekennzeichnet, daß das Basisgasgemisch über die Gaszuführung des Plasmabrenners zugeführt wird.

5. Verfahren nach einem der Ansprüche 1, 2, 3 oder 4, zum Fluorieren von Kunststoffhohlkörpern, dadurch gekennzeichnet, daß der Plasmabrenner und ebenso das Basisgasgemisch direkt ins Innere des Kunststoffhohlkörpers eingeführt werden und auch das Spülgas direkt dem Inneren des Hohlkörpers zugeführt wird.

## Claims

1. A method of fluorinating synthetic resin objects in order to reduce their permeability to gases and vapours, wherein the ready moulded synthetic resin object is introduced into a treatment chamber which can be closed so as to be gas-tight and is positioned therein and wherein for the fluorination a basic gas mixture consisting of inert gas and a fluorine-containing compound (fluorine-containing compounds) is supplied to the treatment chamber, characterised in that a plasma burner is introduced into the treatment chamber or is arranged therein and - after the closure of the treatment chamber - with the aid of the arc of the plasma burner a fluorine-containing treatment gas is produced from the supplied basic gas mixture by splitting the fluorine-containing compound(s) contained therein, which procedure continues until the desired fluorination has been attained.

2. A method as claimed in Claim 1, characterised in that after the fluorination the treatment chamber is flushed with pure inert gas.

3. A method as claimed in Claim 1, characterised in that nitrogen and/or argon are used as inert gas in the basic gas mixture and SF₆ and/or CF₄ are used as fluorine-containing compounds.

4. A method as claimed in Claim 1, 2, or 3, characterised in that the basic gas mixture is supplied via the gas inlet of the plasma burner.

5. A method as claimed in one of Claims, 1, 2, 3, or 4 for the fluorination of synthetic resin hollow bodies, characterised in that both the plasma burner and the basic gas mixture are directly introduced into the interior of the synthetic resin hollow body and that the flushing gas is also directly supplied to the interior of the hollow body.

## Revendications

1. Procédé de fluoration d'objets en matière synthétique afin de diminuer leur perméabilité à l'égard des gaz et des vapeurs, dans lequel l'objet en matière synthétique fini moulé est amené dans une chambre de traitement susceptible d'être fermée de façon étanche au gaz et est positionné dans cette chambre et dans lequel, pour assurer la fluoration, on introduit dans la chambre de traitement un mélange gazeux de base se composant de gaz inerte et d'un ou plusieurs composé(s) contenant du fluor, caractérisé en ce qu'on introduit ou dispose dans la chambre de traitement une torche à plasma et -après fermeture de la chambre de traitement- on crée avec l'arc de la torche à plasma, à partir du mélange gazeux de base introduit, un gaz de traitement contenant du fluor, par craquage du ou des composé(s) contenant du fluor qui s'y trouve(nt), ce craquage étant poursuivi jusqu'à ce que la fluoration souhaitée soit atteinte.

2. Procédé selon la revendication 1, caractérisé en ce qu'après la fluoration, on rince la chambre de traitement avec du gaz inerte pur.

3. Procédé selon la revendication 1, caractérisé en ce qu'on utilise comme gaz inerte du mélange gazeux de base de l'azote et/ou de l'argon, et comme composés contenant du fluor du SF₆ et/ou du CF₄.

4. Procédé selon la revendication 1, 2 ou 3, caractérisé en ce qu'on introduit le mélange gazeux de base par l'admission de gaz de la torche à plasma.

5. Procédé selon l'une des revendications 1, 2, 3 ou 4, pour la fluoration de corps creux en matière synthétique, caractérisé en ce qu'on introduit la torche à plasma et également le mélange gazeux de base directement à l'intérieur du corps creux en matière synthétique et l'on amène également le gaz de rinçage directement à l'intérieur du corps creux.
